# EUROPÄISCHE PATENTSCHRIFT

(11) **EP 2 014 509 B1**
(45) Veröffentlichungstag und Bekanntmachung des Hinweises auf die Patenterteilung: **25.01.2012**
(21) Anmeldenummer: 08004840.8
(22) Anmeldetag: 14.03.2008
(51) Int. Cl.: B60R 5/04

(54) **Abdeckung für einen Spalt**
Cover for a gap
Recouvrement pour une fente

(30) Priorität: 13.07.2007 DE 102007032727
(43) Veröffentlichungstag der Anmeldung: 14.01.2009
(73) Patentinhaber: Dr. Ing. h.c. F. Porsche AG, 70435 Stuttgart (DE)
(72) Erfinder: Hofmann, Peter, 75242 Neuhausen (DE)

(56) Entgegenhaltungen:
- EP-A1- 1 749 699
- DE-A1- 10 109 651
- DE-C1- 19 537 768
- DE-U1-202006 019 913
- FR-A1- 2 895 711
- GB-A- 2 431 905
- JP-A- 2006 088 934
- JP-A- 2006 264 627
- JP-A- 2006 306 147

## Beschreibung

Die vorliegende Erfindung betrifft eine Abdeckung für einen Spalt hinter wenigstens einer Rücksitzlehne in einem Kraftfahrzeug, der zwischen dieser und einer Gepäckraumabdeckung in Fahrzeugquerrichtung gegeben ist, gemäß dem Oberbegriff des Anspruchs 1. Die Erfindung betrifft außerdem ein mit einer derartigen Abdeckung ausgestattetes Kraftfahrzeug.

Insbesondere Fahrzeuge der Kombi-Bauart weisen häufig verschiebbare und/oder klappbare Rücksitze auf, um einen dahinter liegenden Gepäckraum vergrößern zu können. Zudem haben diese Fahrzeuge normalerweise eine Gepäckraumabdeckung, die in der in Fahrzeuglängsrichtung - in Fahrtrichtung gesehen - hintersten Stellung der Rücksitze an die Rückseite der Rücksitzlehne angrenzt. Zwischen dieser und einer Vorderkante der Gepäckraumabdeckung befindet sich dabei ein Spalt, der in Abhängigkeit von der Stellung der Rücksitzlehne in Fahrzeuglängsrichtung mehr oder weniger breit ist.

Aus der DE 103 35 055 A1 ist eine Abdeckung für einen derartigen Spalt bekannt, welche eine Abdeckklappe und eine Rückstelleinrichtung aufweist. Die Abdeckklappe ist - in Fahrtrichtung gesehen - an einer Vorderkante der Gepäckraumabdeckung oder an einem an der Gepäckraumabdeckung angebrachten Scharnierträger mit einem Scharnier angelenkt. Die Rückstelleinrichtung erzeugt eine Gegenkraft, die zum Verschwenken der Abdeckklappe aus der zumindest annähernd horizontalen, zur Rücksitzlehne ragenden Grundstellung überwunden werden muss. Hierdurch kann eine Abdeckung geschaffen werden, welche keine fest mit der Rücksitzlehne verbundene Bauteile aufweist.

Die JP 2006 306 147 A zeigt eine Abdeckung für einen Spalt hinter wenigstens einer Rücksitzlehne in einem Kraftfahrzeug, der zwischen dieser und einer Gepäckraumabdeckung in Fahrzeugquerrichtung gegeben ist, wobei die Abdeckung zumindest eine an einem Gehäuse der Gepäckraumabdeckung in Lage gehaltene Abdeckklappe aufweist, die um ein Scharnier schwenkbar gelagert ist und in einer Gebrauchsstellung unter Vorspannung an der Rücksitzlehne anliegt. An einem oberen und in Fahrtrichtung gesehen vorderen Bereich des Gehäuses der Gepräckraumabdeckung ist eine integrierte Aufnahme für das Scharnier der Abdeckklappe vorgesehen. Ferner ist wenigstens eine Federeinrichtung zur Vorspannung der Abdeckklappe in deren Gebrauchsstellung vorgesehen, die sich einerseits an einer Innenseite der Abdeckklappe und andererseits am Gehäuse der Gepäckraumabdeckung abstützt.

Eine Nichtgebrauchsstellung, in der die Abdeckklappe eng anliegend am Gehäuse der Gepäckraumabdeckung anliegt und in dieser Stellung arretierbar ist, ist dieser Anordnung nicht entnehmbar.

Der vorliegenden Erfindung liegt die Aufgabe zugrunde, für eine gattungsgemäße Abdeckung eine verbesserte oder zumindest eine andere Ausführungsform anzugeben, welche sich insbesondere durch eine kompakte Bauweise auszeichnet.

Die Erfindung löst diese Aufgabe durch den Gegenstand des Anspruchs 1. Vorteilhafte Ausführungsformen sind Gegenstand der abhängigen Ansprüche.

Die Erfindung beruht auf dem allgemeinen Gedanken, bei einer Gepäckraumabdeckung ein Scharnier für eine, einen Spalt hinter wenigstens einer Rücksitzlehne in einem Kraftfahrzeug abdeckenden Abdeckklappe in einem oberen und in Fahrtrichtung gesehenen vorderen Bereich des Gehäuses der Gepäckraumabdeckung zu integrieren und zwar so, dass die Abdeckklappe in ihrer Nichtgebrauchsstellung dicht an dass Gehäuse der Gepäckraumabdeckung anliegt und dadurch sehr kompakt baut. Die Abdeckklappe ist dabei um das Scharnier schwenkbar am Gehäuse der Gepäckraumabdeckung gelagert und zwischen einer Gebrauchsstellung, in welcher sie gegen die in Fahrtrichtung davor gelegene Rücksitzlehne vorgespannt ist und einer Nichtgebrauchsstellung, in welcher sie dicht am Gehäuse der Gepäckraumabdeckung anliegt verstellbar. Die erfindungsgemäße Abdeckung erfüllt somit den an sie gestellten Primärzweck, nämlich den Spalt hinter wenigstens einer Rücksitzlehne in einem Kraftfahrzeug zuverlässig abzudecken können, und zwar unabhängig von der Stellung der Rücksitzlehne gleichzeitig besticht die erfindungsgemäße Abdeckung in ausgebautem Zustand durch einen besonders geringen Bauraumbedarf, wodurch ein Handling deutlich vereinfacht wird.

Zweckmäßig ist wenigstens eine Federeinrichtung zur Vorspannung der Abdeckklappe in deren Gebrauchsstellung vorgesehen, die sich einerseits an einer in der Nichtgebrauchsstellung der Abdeckklappe der Gepäckraumabdeckung zugewandten Seite der Abdeckklappe, also an einer Innenseite der Abdeckklappe, und anderseits am Gehäuse der Gepäckraumabdeckung abstützt. Durch die Federeinrichtung ist eine zuverlässige Abdeckung des Spalts zwischen der Rücksitzlehne und der Gepäckraumabdeckung gegeben und gleichzeitig eine stufenlose Anpassung der Abdeckklappe an unterschiedliche Rücksitzlehnenstellungen möglich. Dabei kann die Abdeckklappe selbstverständlich mehrteilig ausgeführt sein und sich somit individuell an die jeweils davor angeordnete Rücksitzlehne anpassen. Durch die Federeinrichtung ist zudem ein selbstständiges Schließen des Spalts zwischen der Gepäckraumabdeckung und der Rücksitzlehne gegeben, so dass bei ordnungsgemäß angebrachter Gepäckraumabdeckung stets ein zuverlässig geschlossener Spalt gegeben ist.

Zweckmäßig liegt die Abdeckklappe in ihrer Nichtgebrauchsstellung am Gehäuse der Gepäckraumabdeckung an und ist in dieser Stellung arretierbar. Das Anliegen der Abdeckklappe am Gehäuse der Gepäckraumabdeckung gewährleistet den geringen Bauraumbedarf bei sich in ihrer Nichtgebrauchsstellung befindlicher Abdeckklappe. Durch die Arretierbarkeit der Abdeckklappe in ihrer Nichtgebrauchsstellung ist ein ungewolltes und beispielsweise durch die Federeinrichtung beschleunigtes Aufklappen der Abdeckklappe zuverlässig unterbunden, so dass die kompakte Form zuverlässig währendes des Ausbauzustands der Gepäckraumabdeckung beibehalten werden kann.

Bei einer weiteren vorteilhaften Ausführungsform der erfindungsgemäßen Lösung ist an der Abdeckklappe eine Rastkante angeordnet, welche bei sich in ihrer Nichtgebrauchsstellung befindlicher Abdeckklappe in eine gehäuseseitige Rastnut eingreift oder eine gehäuseseitige Rastkontur hintergreift. Eine derartige Verrastung der Abdeckklappe in ihrer Nichtgebrauchsstellung bietet eine einfache Möglichkeit dafür, die Abdeckklappe entgegen der Federvorspannung zuverlässig in ihrer Nichtgebrauchsstellung zu halten. Gleichzeitig stellen derartige Rastverbindungen äußerst einfach zu bedienende Verbindungen dar, so dass bei einem Überführen der Abdeckklappe von der Nichtgebrauchsstellung in deren Gebrauchsstellung lediglich ein Rastwiderstand überwunden werden muss und nicht beispielsweise andere Verriegelungselemente gelöst werden müssen.

Bei einer weiteren vorteilhaften Ausführungsform der erfindungsgemäßen Lösung ist die Abdeckklappe aus demselben Werkstoff ausgebildet, wie ein Gehäuse der Gepäckraumabdeckung. Dies bietet insbesondere den Vorteil, dass sowohl die Abdeckklappe als auch die Gepäckraumabdeckung einen gleichen Wärmeausdehnungskoeffizienten aufweist, was im Hinblick auf die in einem Fahrzeuginnenraum auftretenden großen Temperaturschwankungen von großem Vorteil ist. Gleichzeitig kann durch diese Ausführungsform ein einheitliches Design zwischen Abdeckklappe und Gepäckraumabdeckung bzw. deren Gehäuse erreicht werden, wodurch der ästhetische Eindruck gesteigert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine mögliche Ausführungsform einer erfindungsgemäßen Abdeckung,
- Fig. 2: eine Darstellung wie in Fig. 1, jedoch bei einer anderen Ausführungsform,
- Fig. 3: eine Darstellung wie in Fig. 2, jedoch mit einer anderen Federeinrichtung.

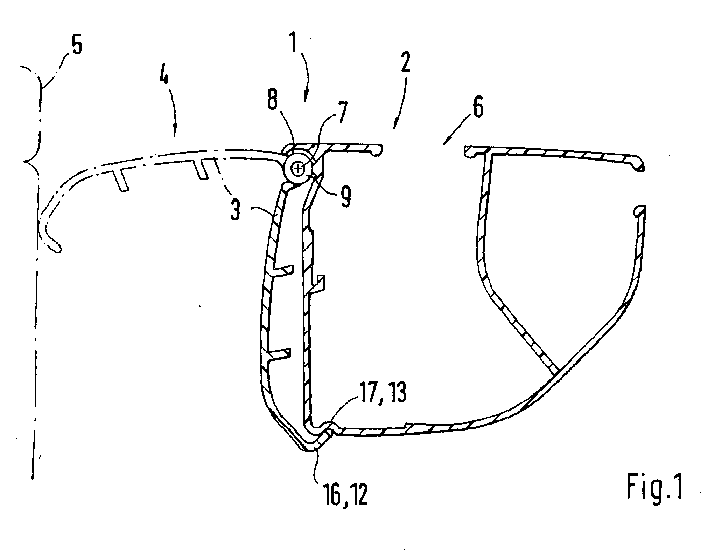

Entsprechend Fig. 1 weist eine erfindungsgemäße Abdeckung 1 eine an einer Gepäckraumabdeckung 2 gelenkig gelagerte Abdeckklappe 3 auf. Mit der Abdeckung 1 ist die Abdeckung eines Spalts 4 hinter wenigstens einer Rücksitzlehne 5 in einem Fahrzeug möglich, wobei der Spalt 4 zwischen der Rücksitzlehne 5 und der Gepäckraumabdeckung 2 in Fahrzeugquerrichtung verläuft. Die Gepäckraumabdeckung 2 weist ein Gehäuse 6 auf, in welchem üblicherweise ein, einen in Fahrtrichtung hinter der Gepäckraumabdeckung 2 gelegenen Laderaum abdeckendes Rollo gelagert ist. Generell ist in den Fig. 1 bis 3 die Abdeckklappe 3 jeweils in einer möglichen Gebrauchs- und einer möglichen Nichtgebrauchsstellung gezeichnet, wobei erkennbar ist, dass die Abdeckklappe 3 in ihrer Nichtgebrauchsstellung eng anliegend am Gehäuse 6 der Gepäckraumabdeckung 2 angeordnet ist.

Zur Abdeckung des zwischen der Gepäckraumabdeckung 2 und der Rücksitzlehne 5 liegenden Spaltes 4 kann die Abdeckklappe 3 um eine in Fahrzeugquerrichtung verlaufende. Drehachse 7 verdreht werden. Dabei ist die Abdeckklappe 3 generell zwischen einer Gebrauchsstellung, in welcher sie unter Vorspannung an der Rücksitzlehne anliegt und einer Nichtgebrauchsstellung, in welcher sie am Gehäuse 6 der Gepäckraumabdeckung 2 anliegt, verstellbar. Bei der Abdeckung 1 gemäß der Erfindung ist an einem oberen und in Fahrtrichtung gesehenen vorderen Bereich des Gehäuses 6 der Gepäckraumabdeckung 2 eine integrierte Aufnahme 8 für ein Scharnier 9 der Abdeckklappe 3 vorgesehen.

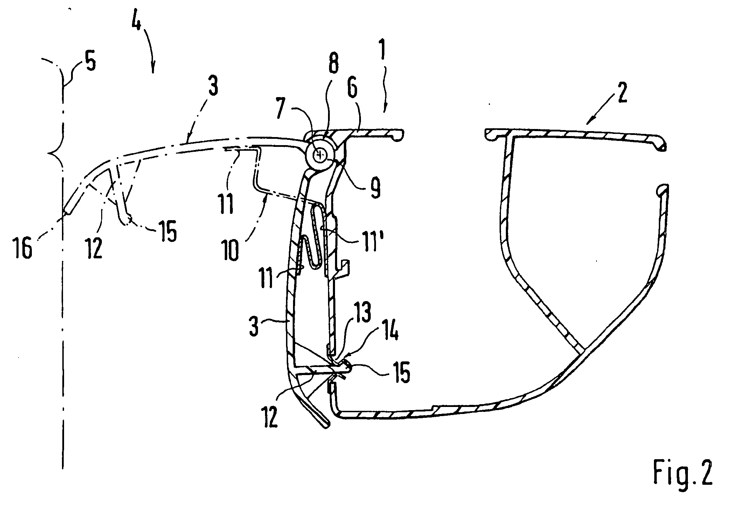

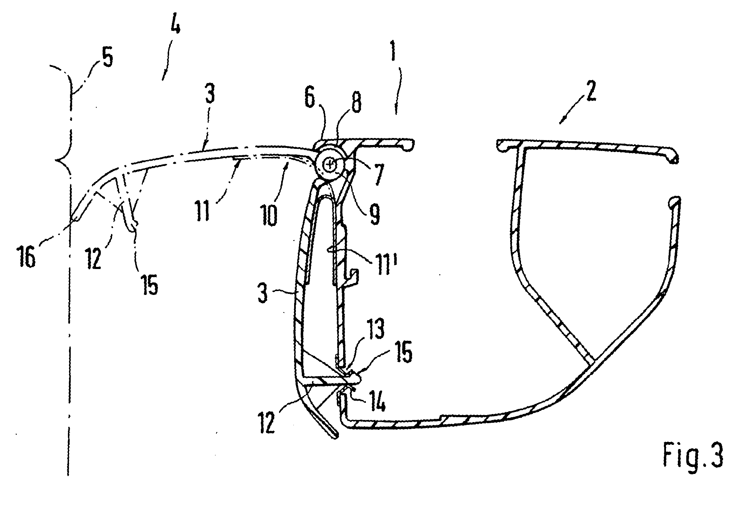

Um die Abdeckklappe 3 unter Vorspannung gegen die Rücksitzlehne 5 anliegen lassen zu können, ist wenigstens eine Federeinrichtung 10 vorgesehen, welche sich einerseits an einer in der Nichtgebrauchsstellung der Abdeckklappe 3 der Gepäckraumabdeckung 2 zugewandten Seite der Abdeckklappe 3, also an einer Innenseite der Abdeckklappe 3, und andererseits am Gehäuse 6 der Gepäckraumabdeckung 2 abstützt. Eine derartige Federeinrichtung 10 ist beispielsweise in den Fig. 2 und 3 gezeigt.

Selbstverständlich kann die Abdeckklappe 3 in Fahrzeugquerrichtung auch mehrteilig ausgeführt sein, so dass eine individuell an eine Stellung der jeweils sich davor befindlichen Rücksitzlehne 5 anpassbare Abdeckung des Spalts 4 erfolgen kann. Hierbei gilt, dass je nach Position der verlagerbaren Rücksitzlehne 5 ein mehr oder weniger großer Spalt 4 zwischen dieser und der Gepäckraumabdeckung 2 entsteht, so dass die Abdeckung 1 hierauf flexibel reagieren muss.

Gemäß den Fig. 2 und 3 weist die wenigstens eine Federeinrichtung 10 zwei Federschenkel 11 und 11' auf, wovon sich der eine Federschenkel 11 an der Innenseite der Abdeckklappe 3 und der andere Federschenkel 11' am Gehäuse 6 der Gepäckraumabdeckung 2 abstützt. Dabei kann die Federeinrichtung 10, wie beispielsweise in Fig. 2 gezeigt, als faltbare Federeinrichtung 10 ausgebildet sein, oder wie in Fig. 3 gezeigt, als einfache Schenkelfeder. Alternative Federarten (einfache Druckfedern in verschiedenen, geeigneten Wickelformen) sind natürlich ebenfalls denkbar.

Zur Entfernung der Gepäckraumabdeckung 2 aus dem Kraftfahrzeug ist es wünschenswert, dass die Abdeckklappe 3 in ihrer Nichtgebrauchsstellung möglichst flach am Gehäuse 6 der Gepäckraumabdeckung 2 anliegt und in dieser Stellung arretierbar ist. Eine Arretierung kann dabei beispielsweise über ein an der Innenseite der Abdeckklappe 3 angeordnetes Rastelement 12, insbesondere über einen Rastkopf 15, erfolgen, welches zur Arretierung der Abdeckklappe 3 in der Nichtgebrauchsstellung mit einem am Gehäuse 6 der Gepäckraumabdeckung 2 angeordneten Gegenrastelement 13, insbesondere mit einer Rastöffnung, wie sie in den Fig. 2 und 3 gezeigt ist, zusammenwirkt bzw. in diese eingreift. Dabei kann das als Rastöffnung ausgebildete Gegenrastelement 13 zumindest ein Federelement 14 aufweisen, welches bei sich in Nichtgebrauchsstellung befindlicher Abdeckklappe 3 den am Rastelement 12 vorgesehenen Rastkopf 15 hintergreift und damit in der Rastöffnung fixiert.

Eine zusätzliche oder hierzu alternative Ausführungsform ist in Fig. 1 gezeigt, bei welcher an der Abdeckklappe 3 eine Rastkante 16 angeordnet ist, welche bei sich in ihrer Nichtgebrauchsstellung befindlichen Abdeckklappe 3 in eine gehäuseseitige Rastnut 17 eingreift oder eine gehäuseseitige Rastkontur hintergreift.

Durch die integrierte Aufnahme 8 für das Scharnier 9 der Abdeckklappe 3 in das Gehäuse 6 der Gepäckraumabdeckung 2 kann eine besonders kompakte Bauweise erreicht werden, was von besonderem Vorteil ist, wenn die Gepäckraumabdeckung 2 aus dem Kraftfahrzeug ausgebaut wird. In diesem Fall kann die Abdeckklappe 3 eng anliegend an dem Gehäuse 6 arretiert werden und verringert dadurch den Platzbedarf der Gepäckraumabdeckung erheblich.

## Patentansprüche

1. Abdeckung (1) für einen Spalt (4) hinter wenigstens einer Rücksitzlehne (5) in einem Kraftfahrzeug, der zwischen dieser und einer Gepäckraumabdeckung (2) in Fahrzeugquerrichtung gegeben ist, wobei die Abdeckung (1) zumindest eine an einem Gehäuse (6) der Gepäckraumabdeckung (2) in Lage gehaltene Abdeckklappe (3) aufweist, die um ein Scharnier (9) schwenkbar gelagert ist und in einer Gebrauchstellung unter Vorspannung an der Rücksitzlehne (5) anliegt, und dass an einem oberen und in Fahrtrichtung gesehen vorderen Bereich des Gehäuses (6) der Gepäckraumabdeckung (2) eine integrierte Aufnahme (8) für das Scharnier (9) der Abdecklappe (3) vorgesehen ist und dass wenigstens eine Federeinrichtung (10) zur Vorspannung der Abdeckklappe (3) in deren Gebrauchsstellung vorgesehen ist, die sich einerseits an einer Innenseite der Abdeckklappe (3), und andererseits am Gehäuse (6) der Gepäckraumabdeckung (2) abstützt, **dadurch gekennzeichnet, dass** die Abdeckklappe (3) in einer Nichtgebrauchsstellung am Gehäuse (6) der Gepäckraumabdeckung (2) anliegt und in dieser Stellung arretierbar ist, wobei an der Innenseite der Abdeckklappe (3) zumindest ein Rastelement (12), insbesondere ein Rastkopf (15), vorgesehen ist, welches zur Arretierung der Abdeckklappe (3) in deren Nichtgebrauchsstellung mit einem am Gehäuse (6) der Gepäckraumabdeckung (2) angeordneten Gegenrastelement (13), insbesondere mit einer Rastöffnung, zusammenwirkt bzw. in diese eingreift oder dass an der Abdeckklappe (3) eine Rastkante (16) angeordnet ist, welche bei sich in ihrer Nichtgebrauchsstellung befindlichen Abdeckklappe (3) in eine gehäuseseitige Rastnut (17) eingreift oder eine gehäuseseitige Rastkontur hintergreift.

2. Abdeckung nach Anspruch 1, **dadurch gekennzeichnet, dass** das als Rastöffnung ausgebildete Gegenrastelement (13) zumindest ein Federelement (14) aufweist, welches bei sich in ihrer Nichtgebrauchsstellung befindlichen Abdeckklappe (3) den am Rastelement (12) vorgesehenen Rastkopf (15) hintergreift und damit in der Rastöffnung fixiert.

3. Abdeckung nach Anspruch 1, **dadurch gekennzeichnet, dass** die Abdeckklappe (3) aus demselben Werkstoff ausgebildet ist, wie das Gehäuse (6) der Gepäckraumabdeckung (2).

## Claims

1. Covering (1) for a gap (4) behind at least one rear seatback (5) in a motor vehicle, which gap is provided in the transverse direction of the vehicle between said rear seatback and a luggage compartment covering (2), wherein the covering (1) has at least one covering flap (3) which is held in position on a housing (6) of the luggage compartment covering (2), is mounted pivotably about a hinge (9) and, in a use position, bears under prestress against the rear seatback (5), and in that an integrated receptacle (8) for the hinge (9) of the covering flap (3) is provided on an upper and, as seen in the direction of travel, front region of the housing (6) of the luggage compartment covering (2), and in that at least one spring device (10) is provided for prestressing the covering flap (3) in the use position thereof, said spring device firstly being supported on an inner side of the covering flap (3), and secondly on the housing (6) of the luggage compartment covering (2), **characterized in that** the covering flap (3) bears in a not-in-use position against the housing (6) of the luggage compartment covering (2) and can be locked in this position, at least one latching element (12), in particular a latching head (15), being provided on the inner side of the covering flap (3) and, for locking the covering flap (3) in the not-in-use position thereof, interacting with a mating latching element (3) arranged on the housing (6) of the luggage compartment covering (2), in particular with a latching opening, or engaging therein, or in that a latching edge (16) is arranged on the covering flap (3) and, when the covering flap (3) is in its not-in-use position, engages in a latching groove (17) on the housing or engages behind a latching contour on the housing.

2. Covering according to Claim 1, **characterized in that** the mating latching element (13) designed as a latching opening has at least one spring element (14) which, when the covering flap (3) is in its not-in-use position, engages behind the latching head (15) provided on the latching element (12) and therefore fixes it in the latching opening.

3. Covering according to Claim 1, **characterized in that** the covering flap (3) is formed from the same material as the housing (6) of the luggage compartment covering (2).

## Revendications

1. Recouvrement (1) pour une fente (4) derrière au moins un dossier de siège arrière (5) dans une voiture automobile, qui est placé dans la direction transversale du véhicule entre ce dossier et une plage arrière (2), dans lequel le recouvrement (1) présente au moins un volet de recouvrement (3) maintenu en position sur un caisson (6) de la plage arrière (2), qui peut pivoter autour d'une charnière (9) et qui s'applique dans une position d'utilisation avec une précontrainte contre le dossier de siège arrière (5), dans lequel il est prévu, dans une région supérieure et avant, par rapport à la direction de déplacement, du caisson (6) de la plage arrière (2), un logement intégré (8) pour la charnière (9) du volet de recouvrement (3), et dans lequel il est prévu au moins un dispositif à ressort (10) pour la précontrainte du volet de recouvrement (3) dans sa position d'utilisation et qui s'appuie d'une part sur un côté intérieur du volet de recouvrement (3) et d'autre part sur le caisson (6) de la plage arrière (2), **caractérisé en ce que** le volet de recouvrement (3) s'applique sur le caisson (6) de la plage arrière (2) dans une position de non utilisation et peut être bloqué dans cette position, dans lequel il est prévu sur le côté intérieur du volet de recouvrement (3) au moins un élément d'encliquetage (12), en particulier une tête d'encliquetage (15), qui coopère avec un élément d'encliquetage opposé (13), en particulier une ouverture d'encliquetage, disposé sur le caisson (6) de la plage arrière (2) pour le blocage du volet de recouvrement (3) dans sa position de non utilisation, ou qui s'engage dans celui-ci, ou **en ce qu'**il se trouve sur le volet de recouvrement (3) une arête d'encliquetage (16), qui s'engage dans une rainure d'encliquetage côté caisson (17) ou qui s'accroche derrière un contour d'encliquetage côté caisson lorsque le volet de recouvrement (3) se trouve dans sa position de non utilisation.

2. Recouvrement selon la revendication 1, **caractérisé en ce que** l'élément d'encliquetage opposé (13) réalisé sous la forme d'une ouverture d'encliquetage présente au moins un élément de ressort (14), qui s'accroche derrière la tête d'encliquetage (15) prévue sur l'élément d'encliquetage (12) lorsque le volet de recouvrement (3) se trouve dans sa position de non utilisation et la fixe ainsi dans l'ouverture d'encliquetage.

3. Recouvrement selon la revendication 1, **caractérisé en ce que** le volet de recouvrement (3) est réalisé dans la même matière que le caisson (6) de la plage arrière (2).
